# EUROPEAN PATENT SPECIFICATION

(11) **EP 3 330 516 B1**
(45) Date of publication and mention of the grant of the patent: **05.05.2021**
(21) Application number: 17199341.3
(22) Date of filing: 31.10.2017
(51) Int. Cl.: F02C 7/052, B01D 45/00, F02K 1/82

(54) **CONTROL TECHNOLOGIES FOR TURBINE ENGINE WITH INTEGRATED INLET PARTICLE SEPARATOR AND INFRARED SUPPRESSION SYSTEM**
STEUERUNGSTECHNOLOGIEN FÜR EINEN TURBINENMOTOR MIT INTEGRIERTEM EINLASSPARTIKELSEPARATOR UND INFRAROTUNTERDRÜCKUNGSSYSTEM
TECHNOLOGIES DE COMMANDE POUR MOTEUR À TURBINE À SÉPARATEUR DE PARTICULES INTÉGRÉ ET SYSTÈME DE SUPPRESSION INFRAROUGE

(30) Priority: 30.11.2016 US 201615364909
(43) Date of publication of application: 06.06.2018
(73) Proprietor: Rolls-Royce Corporation, Indianapolis, Indiana 46225 (US); Rolls-Royce North American Technologies, Inc., Indianapolis, IN 46241 (US)
(72) Inventor: Zeller, Robert J, Noblesville, IN Indiana 46062 (US); Skertic, Richard J, Carmel, IN Indiana 46033 (US); Dougherty, Michael P, Indianapolis, IN Indiana 46228 (US); Cline, C Harvey O, Brownsburg, IN Indiana 46114 (US)
(74) Representative: Rolls-Royce plc

(56) References cited:
- EP-A1- 3 067 532
- US-A- 4 007 587
- US-A- 4 864 819
- US-A1- 2003 196 548
- US-A1- 2016 333 797

## Description

### FIELD OF THE DISCLOSURE

The present disclosure relates generally to gas turbine engines, and more specifically to technology for controlling gas turbine engines.

### BACKGROUND

Gas turbine engines are used to power aircraft, watercraft, power generators, and the like. Gas turbine engines typically include a compressor, a combustor, and a turbine. The compressor compresses air drawn into the engine and delivers high-pressure air to the combustor. In the combustor, fuel is mixed with the high-pressure air and is ignited. Products of the combustion reaction in the combustor are directed into the turbine where work is extracted to drive the compressor and, sometimes, an output shaft. Left-over products of the combustion are exhausted out of the turbine and may provide thrust in some applications.

Typical platforms (e.g., aircraft such as helicopters) may include a gas turbine engine and other components such as an inlet particle separator (IPS) and/or an infrared suppression system (IRS). The gas turbine engine and the IPS and/or the IRS are typically procured by the platform supplier from separate sources. Additionally, the IPS and/or the IRS may be added to the engine and/or the platform before or after delivery of the platform. Accordingly, in typical platforms the IPS and the IRS are not controlled by the engine controller of the gas turbine engine.

Published European patent application EP 3067 532 A1 and published US patent application US 2003/0196548 A1 each disclose a respective arrangement comprising a gas turbine engine and an inlet particle separator (IPS). In each case the inlet particle separator includes a sensor for detecting the level of contamination in the air intake to the IPS, the sensor being connected to a controller having logic which asses the level of contamination and adjusts the IPS accordingly. Published US patent application US 2016/0333797 A1 discloses a system having a gas turbine engine and an infra-red suppression system (IRSS) for reducing IR radiation emitted by the exhaust of the gas turbine engine, the IRSS being controlled by a controller. In the arrangements of EP 3067532 A1 and US 2003/0196548 A1, control of the IPS affects the rate of air intake to the engine. In the system of US 2003/0196548 A1, control of the IRSS affects the back-pressure in the engine.

### SUMMARY

The present disclosure provides a propulsion system for a vehicle, and a method for propulsion system control, as set out in the appended claims.

In a first aspect the present disclosure provides a propulsion system for a vehicle, the propulsion system comprising: an inlet particle separator, wherein the inlet particle separator is variably activated; a gas turbine engine; and an engine controller; characterised in that the engine controller comprises inlet particle separator control logic configured to (i) determine an inlet flow value based on a first activation state of the inlet particle separator, (ii) adjust a first engine operating parameter of the gas turbine engine other than engine air flow based on the first activation state to adapt to or otherwise compensate for the inlet flow and (iii) control the gas turbine engine based on the first engine operating parameter in response to adjustment of the first engine operating parameter.

To determine the inlet flow value based on the first activation state may comprise to determine whether the inlet particle separator is activated or deactivated, or alternatively the first activation state may comprise a modulated activation state.

The propulsion system may further comprise an infrared suppression system, wherein the infrared suppression system is variably activated, wherein the engine controller further comprises infrared suppression system control logic configured to (i) determine a second activation state of the infrared suppression system and (ii) adjust a second engine operating parameter based on the second activation state, and wherein to control the gas turbine engine further comprises to control the gas turbine engine based on the second engine operating parameter in response to adjustment of the second engine operating parameter.

To determine the second activation state may comprise to determine whether the infrared suppression system is activated or deactivated, or alternatively the second activation state may comprise a modulated activation state.

To adjust the second engine operating parameter may comprise to determine a backpressure value based on the second activation state and to adjust the second engine operating parameter based on the backpressure value.

In a second aspect the present disclosure provides a method for propulsion system control, the method comprising the steps of: determining, by an engine controller of a propulsion system, an inlet flow value based on a first activation state of an inlet particle separator of the propulsion system, wherein the inlet particle separator is variably activated; adjusting, by the engine controller, a first engine operating parameter of the gas turbine engine other than engine air flow based on the first activation state to adapt to or otherwise compensate for the inlet flow; and controlling, by the engine controller, the gas turbine engine based on the first engine operating parameter in response to adjusting the first engine operating parameter.

Determining the inlet flow value based on the first activation state may comprise determining whether the inlet particle separator is activated or deactivated, or alternatively determining the first activation state may comprise determining a modulated activation state.

The method may further comprise determining, by the engine controller, a second activation state of an infrared suppression system of the propulsion system, wherein the infrared suppression system is variably activated; and adjusting, by the engine controller, a second engine operating parameter based on the second activation state, wherein controlling the gas turbine engine further comprises controlling the gas turbine engine based on the second engine operating parameter in response to adjusting the second engine operating parameter.

Determining the second activation state may comprise determining whether the infrared suppression system is activated or deactivated, or alternatively determining the second activation state may comprise determining a modulated activation state.

Adjusting the second engine operating parameter may comprise determining a backpressure value based on the second activation state and adjusting the second engine operating parameter based on the backpressure value.

In a third aspect the present disclosure provides a propulsion system for a vehicle, the propulsion system comprising: an infrared suppression system, wherein the infrared suppression system is variably activated; a gas turbine engine; and an engine controller; characterised in that the engine controller comprises infrared suppression system control logic configured to (i) determine a backpressure value based on a first activation state of the infrared suppression system, (ii) adjust a first engine operating parameter of the gas turbine engine based on the first activation state to adapt to or otherwise compensate for the backpressure and (iii) control the gas turbine engine based on the first engine operating parameter in response to adjustment of the first engine operating parameter.

To determine the backpressure value based on the first activation state may comprise to determine whether the infrared suppression system is activated or deactivated, or alternatively the first activation state may comprise a modulated activation state.

### BRIEF DESCRIPTION OF THE DRAWINGS

FIG. 1 is a simplified block diagram of at least one embodiment of a propulsion system including a turbine engine with integrated inlet particle separator and infrared suppression system;
FIG. 2 is a simplified flow diagram of at least one embodiment of a method for engine control that may be executed by the propulsion system of FIG. 1; and
FIG. 3 is a simplified block diagram of at least one embodiment of an engine controller of the propulsion system of FIG. 1.

### DETAILED DESCRIPTION

For the purposes of promoting an understanding of the principles of the disclosure, reference will now be made to a number of illustrative embodiments illustrated in the drawings and specific language will be used to describe the same.

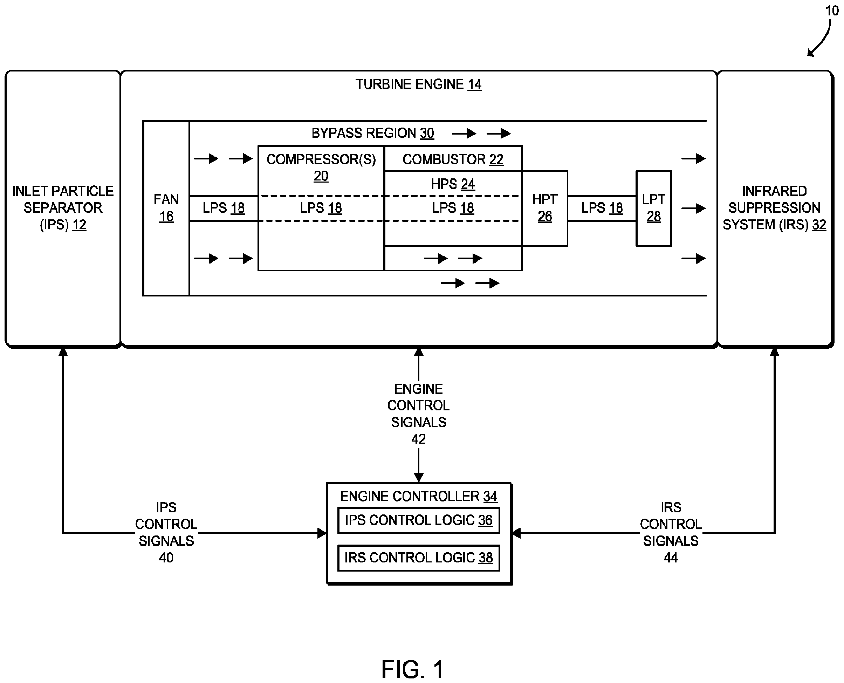

Referring now to FIG. 1, embodiments of a propulsion system 10 include a turbine engine 14, an integrated inlet particle separator (IPS) 12, an integrated infrared suppression system (IRS) 32, and an engine controller 34. In use, as described in further detail below, the engine controller 34 determines whether the IPS 12 and/or the IRS 32 are activated and, based on whether the IPS 12 and/or the IRS 32 are activated, adapts the control of the turbine engine 14. By adapting to the activation of the IPS 12 and/or the IRS 32, the propulsion system 10 may improve efficiency and performance of the turbine engine 14 as compared to non-integrated systems, regardless of the state or mode of the IPS 12 and/or the IRS 32. Additionally, although illustrated as including both an IPS 12 and an IRS 32, it should be understood that in some embodiments the propulsion system 10 may include the IPS 12 and not the IRS 32, or vice versa.

The illustrative turbine engine 14 is a multi-shaft turbofan gas turbine engine configured for aerospace applications; however, aspects of the present disclosure are applicable to other types of turbine engines, including various types of turbofan and turboshaft systems, as well as turbine engines that are configured for other, non-aerospace types of applications. A fan 16 (e.g., a fan, variable pitch propeller, compressor, etc.) draws air into the turbine engine 14. In some embodiments, some of the air drawn into the turbine engine 14 by the fan 16 may bypass other engine components via a bypass region 30 (e.g., a bypass duct). The remaining air flows to one or more compressors 20. For instance, in some embodiments, a low-pressure compressor may increase the pressure of air received from the fan 16, and a high-pressure compressor may further increase the pressure of air received from the low-pressure compressor. In any event, the compressor(s) 20 increase the pressure of the drawn-in air and forward the higher-pressure air to a combustor 22.

In the combustor 22, the pressurized air is mixed with fuel (e.g., gas), which is supplied to the combustor 22 by a fuel supply, for example a fuel pump. Typically, a flow meter, flow control valve, fuel flow sensor, or similar device monitors and/or regulates the flow of fuel into the combustor 22. An igniter (not shown) is typically used to cause the mixture of air and fuel to combust. The high-energy combusted air is directed to one or more turbines 26, 28. In the illustrative embodiment, a high-pressure turbine 26 is disposed in axial flow series with a low-pressure turbine 28. The combusted air expands through the turbines 26, 28, causing the turbines 26, 28 to rotate. The combusted air is then exhausted through, for example, a propulsion nozzle (not shown), which may generate additional propulsion thrust.

The rotation of the turbines 26, 28 causes the engine shafts 18, 24 to rotate. More specifically, rotation of the low-pressure turbine 28 drives a low-pressure shaft 18, which drives the fan 16. Rotation of the high-pressure turbine 26 drives the high-pressure shaft 24, which drives the compressor(s) 20. In the illustrative embodiments, the shafts 18, 24 are concentrically disposed and independently rotatable. In other embodiments, the shafts 18, 24 may be parallel but not concentric.

The IPS 12 is configured to receive atmospheric air that may include dust, sand, water, ice, or other debris particles. The IPS 12 separates the atmospheric air into a stream of relatively clean air, including fewer particles, that is provided to the turbine engine 14 (e.g., to the fan 16) and a stream of relatively dirty air, including more particles, that may be ejected from the propulsion system 10. For example, the IPS 12 may be embodied as an inertial particle separator including various surfaces (e.g., inlet splitters, ramps, and/or vanes) shaped to cause the inlet air to swirl, forcing heavier debris particles away from the center of the air stream and out of the propulsion system 10 (e.g., toward a scavenge passageway, blower motor, bleed valves, or other air ejection system). The IPS 12 is actuated or otherwise controllable by the engine controller 34 using the IPS control signals 40. The IPS 12 may be operable in at least two modes (e.g., on and off) or positions (e.g., open or closed), and in some embodiments may be continuously variable. For example, in some embodiments, the IPS 12 may be selectively enabled or disabled (i.e. turned on or turned off) by the engine controller 34. Additionally or alternatively, in some embodiments the operation of the IPS 12 may be modulated or otherwise varied between being completely disabled and completely enabled. For example, the IPS 12 may be controlled by opening or closing various aerodynamic surfaces, configuring valves, or otherwise controlling the flow of inlet air through or around the IPS 12.

The IRS 32 is configured to reduce the infrared signature of the propulsion system 10. For example, the IRS 32 may mix hot exhaust gases emitted by the turbine engine 14 with cool, ambient air to reduce the temperature of gases emitted by the propulsion system 10. As another example, the IRS 32 may include ducting, shrouds, or other systems that prevent a line-of-sight view from outside of the propulsion system 10 to the hot components of the turbine engine 14. Similar to the IPS 12, the IRS 32 is actuated or otherwise controllable by the engine controller 34 using the IRS control signals 44. The IRS 32 may be operable in at least two modes (e.g., on and off) or positions (e.g., open or closed), and in some embodiments may be continuously variable. For example, in some embodiments, the IRS 32 may be selectively enabled or disabled (i.e. turned on or turned off) by the engine controller 34. Additionally or alternatively, in some embodiments the operation of the IRS 32 may be modulated or otherwise varied between being completely disabled and completely enabled. For example, the IRS 32 may be controlled by moving various surfaces or other features to control mixing of ambient air with hot exhaust gases and/or to shield hot internal components from line-of-sight view.

The engine controller 34 controls the overall operation of the turbine engine 14 or various components of the propulsion system 10 and may be embodied as any microcontroller, microprocessor, embedded system, or other computing device capable of performing the functions described herein. For example, the engine controller 34 may be embodied as a full-authority digital engine controller (FADEC). In addition to various other control operations, the engine controller 34 includes IPS control logic 36 and IRS control logic 38. Each of the IPS control logic 36 and the IRS control logic 38 may be embodied as hardware, firmware, software, or a combination thereof. For example, the IPS control logic 36 and/or the IRS control logic 38 may form a portion of, or otherwise be established by, a processor or other hardware components of the engine controller 34. As such, in some embodiments, the IPS control logic 36 and/or the IRS control logic 38 may be embodied as a circuit or collection of electrical devices (e.g., an IPS control logic circuit and/or an IRS control logic circuit). Additionally, in although illustrated as being included in the engine controller 34, it should be understood that in some embodiments the IPS control logic 36 and/or the IRS control logic 38 may be included in a separate controller, control unit, or other component of the propulsion system 10, such as an IPS controller or an IRS controller. As shown, the engine controller 34 may communicate with IPS 12, the turbine engine 14, and the IRS 32 using one or more IPS control signals 40, engine control signals 42, and IRS control signals 44, respectively.

As described further below, the IPS control logic 36 is configured to determine an activation state of the IPS 12, adjust one or more engine operating parameters based on that activation state, and control the gas turbine engine 14 based on the adjusted engine operating parameters. Similarly, the IRS control logic 38 is configured to determine an activation state of the IRS 32, adjust one or more engine operating parameters based on that activation state, and control the gas turbine engine 14 based on the adjusted engine operating parameters. Additionally, although illustrated as including both IPS control logic 36 and IRS control logic 38, it should understood that the engine controller 34 may include the IPS control logic 36 but not the IRS control logic 38, or vice versa.

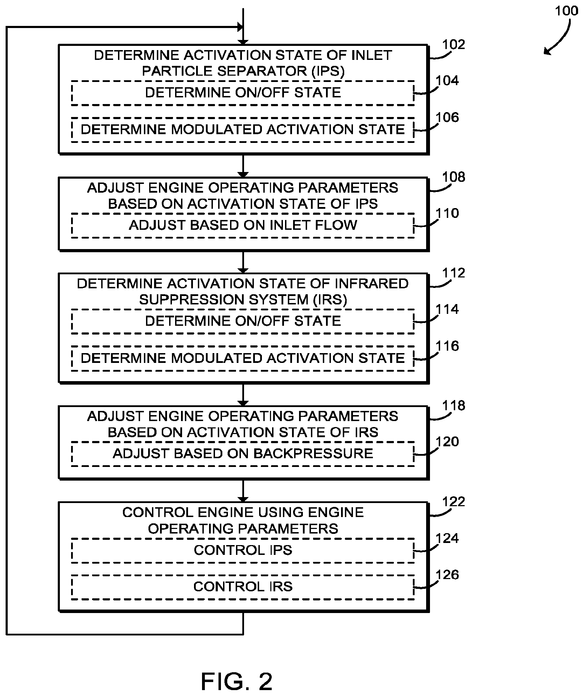

Referring now to FIG. 2, an illustrative method 100 that may be executed by the propulsion system 10 (e.g., by the engine controller 34) is shown. Aspects of the method 100 may be embodied as electrical circuitry, computerized programs, routines, logic, and/or instructions, such as the IPS control logic 36 and/or the IRS control logic 38. The illustrative method 100 may be executed by the propulsion system 10 in real time during normal operation of a turbine-engine-powered vehicle/system.

The method 100 begins in block 102, in which the engine controller 34 determines the activation state of the IPS 12. The activation state may be embodied as any indication of whether the IPS 12 is activated, enabled, or otherwise operational. The IPS 12 may be activated or deactivated in response to a user command (e.g., a pilot command) or, in some embodiments, may be activated or deactivated automatically by the engine controller 34. For example, as described below, in some embodiments the engine controller 34 may control the IPS 12 to improve engine performance. In some embodiments, in block 104 the engine controller 34 may determine whether the IPS 12 is activated or deactivated (i.e., on or off). In some embodiments, in block 106 the engine controller 34 may determine a modulated activation state of the IPS 12. For example, the engine controller 34 may determine that the IPS 12 has been activated at a particular percentage of full capacity or otherwise determine a variable degree of activation.

In block 108, the engine controller 34 adjusts one or more engine operating parameters based on the activation state of the IPS 12. When the IPS 12 is activated, operating conditions of the turbine engine 14 may be affected, and thus performance, efficiency, and other characteristics of the turbine engine 14 may be affected. The engine controller 34 may adjust one or more operating parameters to optimize performance of the turbine engine 14 for maximum efficiency, power, or other optimization objective, based on the activation state of the IPS 12. For example, the engine controller 34 may adjust operating parameters such as fuel flow rate, engine speed, engine air flow, or other operating parameters, whereby the parameter engine air flow is an example not covered by the claims of the present invention. The engine controller 34 may adjust the operating parameters using any appropriate control algorithm, such as a model-based control algorithm. In some embodiments, in block 110 the engine controller 34 may adjust the operating parameters based on an inlet flow that is determined based on the activation state of the IPS 12. For example, activating the IPS 12 may reduce the inlet air flow to the turbine engine 14. The engine controller 34 may determine the inlet airflow based on the activation state of the IPS 12 and then adjust one or more operating parameters to adapt to or otherwise compensate for the reduced inlet air flow. By adapting to the reduced inlet air flow, the engine controller 34 may improve engine performance.

In block 112, the engine controller 34 determines the activation state of the IRS 32. The activation state may be embodied as any indication of whether the IRS 32 is activated, enabled, or otherwise operational. The IRS 32 may be activated or deactivated in response to a user command (e.g., a pilot command) or, in some embodiments, may be activated or deactivated automatically by the engine controller 34. For example, as described below, in some embodiments the engine controller 34 may control the IRS 32 to improve engine performance. In some embodiments, in block 114 the engine controller 34 may determine whether the IRS 32 is activated or deactivated (i.e., on or off). In some embodiments, in block 116 the engine controller 34 may determine a modulated activation state of the IRS 32. For example, the engine controller 34 may determine that the IRS 32 has been activated at a particular percentage of full capacity or otherwise determine a variable degree of activation.

In block 118, the engine controller 34 adjusts one or more engine operating parameters based on the activation state of the IRS 32. When the IRS 32 is activated, operating conditions of the turbine engine 14 may be affected, and thus performance, efficiency, and other characteristics of the turbine engine 14 may be affected. The engine controller 34 may adjust one or more operating parameters to optimize performance of the turbine engine 14 for maximum efficiency, power, or other optimization objective, based on the activation state of the IRS 32. For example, the engine controller 34 may adjust operating parameters such as fuel flow rate, engine speed, engine air flow, or other operating parameters. As described above, the engine controller 34 may adjust the operating parameters using any appropriate control algorithm, such as a model-based control algorithm. In some embodiments, in block 120 the engine controller 34 may adjust the operating parameters based on backpressure that is determined based on the activation state of the IRS 32. For example, activating the IRS 32 may increase backpressure to the turbine engine 14. Increasing the backpressure may affect engine performance and reduce the surge margin of the turbine engine 14. The engine controller 34 may determine the backpressure based on the activation state of the IRS 32 and then adjust one or more operating parameters to adapt to or otherwise compensate for the increased backpressure. By adapting to the increased backpressure, the engine controller 34 may improve engine performance and/or increase surge margin.

In block 122, the engine controller 34 controls the turbine engine 14 using the engine operating parameters determined as described above in connection with blocks 108, 118. The engine controller 34 may control the turbine engine 14 by updating, adjusting, or otherwise generating one or more engine control signals 42 based on the engine operating parameters. For example, the engine controller 34 may send engine control signals 42 to realize the fuel flow rate, engine speed, air flow, or other operating parameters determined as described above.

In some embodiments, in block 124 the engine controller 34 may control the IPS 12 based on the adjusted operating parameters. The engine controller 34, for example, may send one or more IPS control signals 40 to the IPS 12 to control the activation state of the IPS 12. In some embodiments, the engine controller 34 may control the IPS 12 to improve engine efficiency, power delivery, or to achieve other optimization objectives. For example, the engine controller 34 may control the IPS 12 to achieve a desired inlet airflow, which may improve efficiency and/or performance in some embodiments. In some embodiments, the engine controller 34 may control the IPS 12 only when the user (e.g., the pilot) has deactivated the IPS 12. Similarly, in some embodiments, in block 126 the engine controller 34 may control the IRS 32 based on the adjusted operating parameters. The engine controller 34, for example, may send one or more IRS control signals 44 to the IRS 32 to control the activation state of the IRS 32. In some embodiments, the engine controller 34 may control the IRS 32 to improve engine efficiency, power delivery, or to achieve other optimization objectives. For example, the engine controller 34 may control the IRS 32 to achieve a desired engine backpressure, which may improve efficiency and/or performance in some embodiments. In some embodiments, the engine controller 34 may control the IRS 32 only when the user (e.g., the pilot) has deactivated the IRS 32. After controlling the turbine engine 14, the method 100 loops back to block 102 to continue controlling the propulsion system 10.

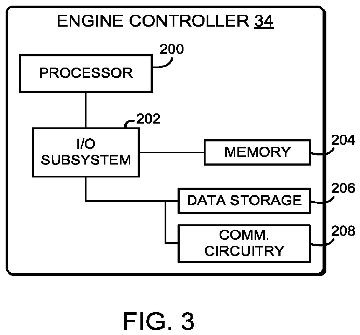

Referring now to FIG. 3, an embodiment of the engine controller 34 is shown. The illustrative engine controller 34 is embodied as one or more computing devices, which may include one or more controllers or processors (e.g., microcontrollers, microprocessors, digital signal processors, field-programmable gate arrays (FPGAs), programmable logic arrays (PLAs), etc.), and/or other electrical circuitry. The engine controller 34 includes hardware, firmware, and/or software components that are capable of performing the functions disclosed herein, including the functions of the IPS control logic 36 and/or the IRS control logic 38. The engine controller 34 may be in communication with one or more other devices (such as one or more embedded controllers) by one or more communication networks (not shown), in order to perform one or more of the disclosed functions. Additionally, although illustrated as a single component, it should be understood that in some embodiments the functions of the engine controller 34 may be distributed in multiple components throughout the propulsion system 10.

The illustrative engine controller 34 includes at least one processor 200, an input/output (I/O) subsystem 202, and a memory 204. The I/O subsystem 202 typically includes, among other things, an I/O controller, a memory controller, and one or more I/O ports, although not specifically shown. The processor 200 and the I/O subsystem 202 are communicatively coupled to the memory 204. The memory 204 may be embodied as any type of suitable computer memory device (e.g., volatile memory such as various forms of random access memory). The I/O subsystem 202 is communicatively coupled to a number of hardware and/or software components, including a data storage device 206 and communication circuitry 208.

The data storage device 206 may include one or more hard drives or other suitable persistent data storage devices (e.g., flash memory, memory cards, memory sticks, read-only memory devices, and/or others). Various data needed by the propulsion system 10 (e.g., the IPS control logic 36 and/or the IRS control logic 38) may be stored by the data storage device 206. Portions of the IPS control logic 36 and/or the IRS control logic 38 may be copied to the memory 204 during operation of the propulsion system 10, for faster processing or other reasons. The IPS control logic 36 and/or the IRS control logic 38 may be embodied as one or more computer-executable components and/or data structures (e.g., computer hardware, firmware, software, or a combination thereof). Particular aspects of the methods that may be performed by the IPS control logic 36 and/or the IRS control logic 38 may vary depending on the requirements of a particular design of the propulsion system 10. Accordingly, the examples described herein are illustrative and intended to be non-limiting.

The communication circuitry 208 may communicatively couple the engine controller 34 to one or more other devices, systems, or communication networks, e.g., a vehicle area network, controller area network, local area network, and/or wide area network, for example. Accordingly, the communication circuitry 208 may include one or more wired or wireless network interface software, firmware, or hardware, for example, as may be needed pursuant to the specifications and/or design of the particular propulsion system 10. Further, the engine controller 34 may include other components, subcomponents, and devices not illustrated herein for clarity of the description. In general, the components of the engine controller 34 are communicatively coupled as shown in FIG. 3 by electronic signal paths, which may be embodied as any type of wired or wireless signal paths capable of facilitating communication between the respective devices and components.

In the foregoing description, numerous specific details, examples, and scenarios are set forth in order to provide a more thorough understanding of the present disclosure. It will be appreciated, however, that embodiments of the disclosure may be practiced without such specific details. Further, such examples and scenarios are provided for illustration, and are not intended to limit the disclosure in any way. Those of ordinary skill in the art, with the included descriptions, should be able to implement appropriate functionality without undue experimentation.

References in the specification to "an embodiment," etc., indicate that the embodiment described may include a particular feature, structure, or characteristic, but every embodiment may not necessarily include the particular feature, structure, or characteristic. Such phrases are not necessarily referring to the same embodiment. Further, when a particular feature, structure, or characteristic is described in connection with an embodiment, it is believed to be within the knowledge of one skilled in the art to effect such feature, structure, or characteristic in connection with other embodiments whether or not explicitly indicated.

Embodiments in accordance with the disclosure may be implemented in hardware, firmware, software, or any combination thereof. Embodiments may also be implemented as instructions stored using one or more machine-readable media, which may be read and executed by one or more processors. A machine-readable medium may include any mechanism for storing or transmitting information in a form readable by a machine. For example, a machine-readable medium may include any suitable form of volatile or non-volatile memory.

Modules, data structures, and the like defined herein are defined as such for ease of discussion, and are not intended to imply that any specific implementation details are required. For example, any of the described modules and/or data structures may be combined or divided into sub-modules, sub-processes or other units of computer code or data as may be required by a particular design or implementation.

In the drawings, specific arrangements or orderings of schematic elements may be shown for ease of description. However, the specific ordering or arrangement of such elements is not meant to imply that a particular order or sequence of processing, or separation of processes, is required in all embodiments. In general, schematic elements used to represent instruction blocks or modules may be implemented using any suitable form of machine-readable instruction, and each such instruction may be implemented using any suitable programming language, library, application programming interface (API), and/or other software development tools or frameworks. Similarly, schematic elements used to represent data or information may be implemented using any suitable electronic arrangement or data structure. Further, some connections, relationships, or associations between elements may be simplified or not shown in the drawings so as not to obscure the disclosure.

While the disclosure has been illustrated and described in detail in the foregoing drawings and description, the same is to be considered as exemplary and not restrictive in character, it being understood that only illustrative embodiments thereof have been shown and described and that all changes and modifications that come within the scope of the following claims are desired to be protected.

## Claims

1. A propulsion system (10) for a vehicle, the propulsion system comprising:
an inlet particle separator (12), wherein the inlet particle separator is variably activated;
a gas turbine engine (14); and
an engine controller (34);
**characterised in that** the engine controller comprises inlet particle separator control logic (36) configured to (i) determine an inlet flow value based on a first activation state of the inlet particle separator, (ii) adjust a first engine operating parameter of the gas turbine engine other than engine air flow based on the first activation state to adapt to or otherwise compensate for the inlet flow, and (iii) control the gas turbine engine based on the first engine operating parameter in response to adjustment of the first engine operating parameter.

2. The propulsion system of claim 1, wherein to determine the inlet flow value based on the first activation state comprises to determine whether the inlet particle separator is activated or deactivated, or wherein the first activation state comprises a modulated activation state.

3. The propulsion system of any preceding claim, further comprising:
an infrared suppression system (32), wherein the infrared suppression system is variably activated;
wherein the engine controller further comprises infrared suppression system control logic (38) configured to (i) determine a second activation state of the infrared suppression system and (ii) adjust a second engine operating parameter based on the second activation state; and
wherein to control the gas turbine engine further comprises to control the gas turbine engine based on the second engine operating parameter in response to adjustment of the second engine operating parameter.

4. The propulsion system of claim 3, wherein to determine the second activation state comprises to determine whether the infrared suppression system is activated or deactivated, or wherein the second activation state comprises a modulated activation state.

5. The propulsion system of claim 3 or claim 4, wherein to adjust the second engine operating parameter comprises to determine a backpressure value based on the second activation state and to adjust the second engine operating parameter based on the backpressure value.

6. A method (100) for propulsion system control, the method comprising the steps of:
determining (102), by an engine controller of a propulsion system, an inlet flow value based on a first activation state of an inlet particle separator of the propulsion system, wherein the inlet particle separator is variably activated;
adjusting (108), by the engine controller, a first engine operating parameter of the gas turbine engine other than engine air flow based on the first activation state to adapt to or otherwise compensate for the inlet flow; and
controlling (122), by the engine controller, the gas turbine engine based on the first engine operating parameter in response to adjusting the first engine operating parameter.

7. The method of claim 6, wherein determining the inlet flow value based on the first activation state comprises determining (104) whether the inlet particle separator is activated or deactivated, or wherein determining the first activation state comprises determining a modulated activation state.

8. The method of claim 6 or claim 7, further comprising:
determining (112), by the engine controller, a second activation state of an infrared suppression system of the propulsion system, wherein the infrared suppression system is variably activated; and
adjusting (118), by the engine controller, a second engine operating parameter based on the second activation state;
wherein controlling the gas turbine engine further comprises controlling the gas turbine engine based on the second engine operating parameter in response to adjusting the second engine operating parameter.

9. The method of claim 8, wherein determining the second activation state comprises determining (114) whether the infrared suppression system is activated or deactivated, or wherein determining the second activation state comprises determining (116) a modulated activation state.

10. The method of claim 8 or claim 9, wherein adjusting the second engine operating parameter comprises determining a backpressure value based on the second activation state and adjusting the second engine operating parameter based on the backpressure value.

11. A propulsion system (10) for a vehicle, the propulsion system comprising:
an infrared suppression system (32), wherein the infrared suppression system is variably activated;
a gas turbine engine (14); and
an engine controller (34);
**characterised in that** the engine controller comprises infrared suppression system control logic (38) configured to (i) determine a backpressure value based on a first activation state of the infrared suppression system, (ii) adjust a first engine operating parameter of the gas turbine engine based on the first activation state to adapt to or otherwise compensate for the backpressure, and (iii) control the gas turbine engine based on the first engine operating parameter in response to adjustment of the first engine operating parameter.

12. The propulsion system of claim 11, wherein to determine the backpressure value based on the first activation state comprises to determine whether the infrared suppression system is activated or deactivated, or wherein the first activation state comprises a modulated activation state.

## Patentansprüche

1. Antriebssystem (10) für ein Fahrzeug, wobei das Antriebssystem folgendes umfasst:
einen Einlasspartikelabscheider (12), wobei der Einlasspartikelabscheider variabel aktiviert wird;
ein Gasturbinentriebwerk (14); und
eine Triebwerksteuereinheit (34);
**dadurch gekennzeichnet, dass** die Triebwerksteuereinheit eine Einlasspartikelabscheider-Steuerlogik (36) umfasst, die für folgende Zwecke gestaltet ist: (i) Bestimmen eines Einlassströmungswertes auf der Basis eines ersten Aktivierungszustands des Einlasspartikelabscheiders, (ii) Einstellen eines ersten Triebwerkbetriebsparameters des Gasturbinentriebwerks, bei dem es sich nicht um die Triebwerkluftströmung handelt, auf der Basis des ersten Aktivierungszustands, um eine Anpassung an die Einlassströmung vorzunehmen oder um die Einlassströmung anderweitig zu kompensieren, und (iii) Steuern des Gasturbinentriebwerks auf der Basis des ersten Triebwerkbetriebsparameters als Reaktion auf die Einstellung des ersten Triebwerkbetriebsparameters.

2. Antriebssystem nach Anspruch 1, wobei das Bestimmen des Einlassströmungswertes auf der Basis des ersten Aktivierungszustands das Bestimmen umfasst, ob der Einlasspartikelabscheider aktiviert oder deaktiviert ist, oder wobei der erste Aktivierungszustand einen modulierten Aktivierungszustand umfasst.

3. Antriebssystem nach einem der vorstehenden Ansprüche, ferner umfassend:
ein Infrarotunterdrückungssystem (32), wobei das Infrarotunterdrückungssystem variabel aktiviert wird;
wobei die Triebwerksteuereinheit ferner eine Infrarotunterdrückungssystem-Steuerlogik (38) umfasst, die für folgende Zwecke gestaltet ist: (i) Bestimmen eines zweiten Aktivierungszustands des Infrarotunterdrückungssystems und (ii) Einstellen eines zweiten Triebwerkbetriebsparameters auf der Basis des zweiten Aktivierungszustands; und
wobei das Steuern des Gasturbinentriebwerks ferner das Steuern des Gasturbinentriebwerks auf der Basis des zweiten Triebwerkbetriebsparameters als Reaktion auf die Einstellung des zweiten Triebwerkbetriebsparameters umfasst.

4. Antriebssystem nach Anspruch 3, wobei das Bestimmen des zweiten Aktivierungszustands das Bestimmen umfasst, ob das Infrarotunterdrückungssystem aktiviert oder deaktiviert ist, oder wobei der zweite Aktivierungszustand einen modulierten Aktivierungszustand umfasst.

5. Antriebssystem nach Anspruch 3 oder Anspruch 4, wobei das Einstellen des zweiten Triebwerkbetriebsparameters das Bestimmen eines Gegendruckwertes auf der Basis des zweiten Aktivierungszustands umfasst und das Einstellen des zweiten Triebwerkbetriebsparameters auf der Basis des Gegendruckwertes.

6. Verfahren (100) zur Antriebssystemsteuerung, wobei das Verfahren die folgenden Schritte umfasst:
durch eine Triebwerksteuereinheit eines Antriebssystems, Bestimmen (102) eines Einlassströmungswertes auf der Basis eines ersten Aktivierungszustands eines Einlasspartikelabscheiders des Antriebssystems, wobei der Einlasspartikelabscheider variabel aktiviert wird;
durch die Triebwerksteuereinheit, Einstellen (108) eines ersten Triebwerkbetriebsparameters des Gasturbinentriebwerks, bei dem es sich nicht um die Triebwerkluftströmung handelt, auf der Basis des ersten Aktivierungszustands, um eine Anpassung an die Einlassströmung vorzunehmen oder um die Einlassströmung anderweitig zu kompensieren; und
durch die Triebwerksteuereinheit, Steuern (122) des Gasturbinentriebwerks auf der Basis des ersten Triebwerkbetriebsparameters als Reaktion auf die Einstellung des ersten Triebwerkbetriebsparameters.

7. Verfahren nach Anspruch 6, wobei das Bestimmen des Einlassströmungswertes auf der Basis des ersten Aktivierungszustands das Bestimmen (104) umfasst, ob der Einlasspartikelabscheider aktiviert oder deaktiviert ist, oder wobei das Bestimmen des ersten Aktivierungszustands das Bestimmen eines modulierten Aktivierungszustands umfasst.

8. Verfahren nach Anspruch 6 oder Anspruch 7, ferner umfassend:
durch die Triebwerksteuereinheit, Bestimmen (112) eines zweiten Aktivierungszustands eines Infrarotunterdrückungssystems des Antriebssystems, wobei das Infrarotunterdrückungssystem variabel aktiviert wird; und
durch die Triebwerksteuereinheit, Einstellen (118) eines zweiten Triebwerkbetriebsparameters auf der Basis des zweiten Aktivierungszustands;
wobei das Steuern des Gasturbinentriebwerks ferner das Steuern des Gasturbinentriebwerks auf der Basis des zweiten Triebwerkbetriebsparameters als Reaktion auf die Einstellung des zweiten Triebwerkbetriebsparameters umfasst.

9. Verfahren nach Anspruch 8, wobei das Bestimmen des zweiten Aktivierungszustands das Bestimmen (114) umfasst, ob das Infrarotunterdrückungssystem aktiviert oder deaktiviert ist, oder wobei das Bestimmen des zweiten Aktivierungszustands das Bestimmen (116) eines modulierten Aktivierungszustands umfasst.

10. Verfahren nach Anspruch 8 oder Anspruch 9, wobei das Einstellen des zweiten Triebwerkbetriebsparameters das Bestimmen eines Gegendruckwertes auf der Basis des zweiten Aktivierungszustands umfasst und das Einstellen des zweiten Triebwerkbetriebsparameters auf der Basis des Gegendruckwertes.

11. Antriebssystem (10) für ein Fahrzeug, wobei das Antriebssystem folgendes umfasst:
ein Infrarotunterdrückungssystem (32), wobei das Infrarotunterdrückungssystem variabel aktiviert wird;
ein Gasturbinentriebwerk (14); und
eine Triebwerksteuereinheit (34);
**dadurch gekennzeichnet, dass** die Triebwerksteuereinheit eine Infrarotunterdrückungssystem-Steuerlogik (38) umfasst, die für folgende Zwecke gestaltet ist: (i) Bestimmen eines Gegendruckwertes auf der Basis eines ersten Aktivierungszustands des Infrarotunterdrückungssystems (ii) Einstellen eines ersten Triebwerkbetriebsparameters auf der Basis des ersten Aktivierungszustands, um eine Anpassung an den Gegendruck vorzunehmen oder um den Gegendruck anderweitig zu kompensieren, und (iii) Steuern des Gasturbinentriebwerks auf der Basis des ersten Triebwerkbetriebsparameters als Reaktion auf die Einstellung des ersten Triebwerkbetriebsparameters.

12. Antriebssystem nach Anspruch 11, wobei das Bestimmen des Gegendruckwertes auf der Basis des ersten Aktivierungszustands das Bestimmen umfasst, ob das Infrarotunterdrückungssystem aktiviert oder deaktiviert ist, oder wobei der erste Aktivierungszustand einen modulierten Aktivierungszustand umfasst.

## Revendications

1. Système de propulsion (10) pour véhicule, le système de propulsion comprenant :
un séparateur de particules d'entrée (12), le séparateur de particules d'entrée étant activé de manière variable ;
un moteur à turbine à gaz (14) ; et
un dispositif de commande de moteur (34) ;
**caractérisé en ce que** le dispositif de commande de moteur comprend une logique de commande de séparateur de particules d'entrée (36) conçue pour (i) déterminer une valeur de débit d'entrée en fonction d'un premier état d'activation du séparateur de particules d'entrée, (ii) ajuster un premier paramètre de fonctionnement de moteur du moteur à turbine à gaz autre que le débit d'air de moteur en fonction du premier état d'activation pour s'adapter au débit d'entrée ou autrement le compenser, et (iii) commander le moteur à turbine à gaz en fonction du premier paramètre de fonctionnement de moteur en réponse à l'ajustement du premier paramètre de fonctionnement de moteur.

2. Système de propulsion selon la revendication 1, la détermination de la valeur de débit d'entrée en fonction du premier état d'activation comprenant la détermination du fait que le séparateur de particules d'entrée est activé ou désactivé, ou le premier état d'activation comprenant un état d'activation modulé.

3. Système de propulsion selon l'une quelconque des revendications précédentes, comprenant en outre :
un système de suppression infrarouge (32), le système de suppression infrarouge étant activé de manière variable ;
le dispositif de commande de moteur comprenant en outre une logique de commande de système de suppression infrarouge (38) conçue pour (i) déterminer un second état d'activation du système de suppression infrarouge et (ii) ajuster un second paramètre de fonctionnement de moteur en fonction du second état d'activation ; et
la commande du moteur à turbine à gaz comprenant en outre la commande du moteur à turbine à gaz en fonction du second paramètre de fonctionnement de moteur en réponse à l'ajustement du second paramètre de fonctionnement de moteur.

4. Système de propulsion selon la revendication 3, la détermination du second état d'activation comprenant la détermination du fait que le système de suppression infrarouge est activé ou désactivé, ou le second état d'activation comprenant un état d'activation modulé.

5. Système de propulsion selon la revendication 3 ou la revendication 4, l'ajustement du second paramètre de fonctionnement de moteur comprenant la détermination d'une valeur de contre-pression en fonction du second état d'activation et l'ajustement du second paramètre de fonctionnement de moteur en fonction de la valeur de contre-pression.

6. Procédé (100) de commande de système de propulsion, le procédé comprenant les étapes consistant à :
déterminer (102), par un dispositif de commande de moteur d'un système de propulsion, une valeur de débit d'entrée en fonction d'un premier état d'activation d'un séparateur de particules d'entrée du système de propulsion, le séparateur de particules d'entrée étant activé de manière variable ;
ajuster (108), par le dispositif de commande de moteur, un premier paramètre de fonctionnement de moteur du moteur à turbine à gaz autre que le débit d'air de moteur en fonction du premier état d'activation pour s'adapter au débit d'entrée ou autrement le compenser ; et
commander (122), par le dispositif de commande de moteur, le moteur à turbine à gaz en fonction du premier paramètre de fonctionnement de moteur en réponse à l'ajustement du premier paramètre de fonctionnement de moteur.

7. Procédé selon la revendication 6, la détermination de la valeur de débit d'entrée en fonction du premier état d'activation comprenant la détermination (104) du fait que le séparateur de particules d'entrée est activé ou désactivé, ou la détermination du premier état d'activation comprenant la détermination d'un état d'activation modulé.

8. Procédé selon la revendication 6 ou 7, comprenant en outre les étapes consistant à :
déterminer (112), par le dispositif de commande de moteur, un second état d'activation d'un système de suppression infrarouge du système de propulsion, le système de suppression infrarouge étant activé de manière variable ; et
ajuster (118), par le dispositif de commande de moteur, un second paramètre de fonctionnement de moteur en fonction du second état d'activation ;
la commande du moteur à turbine à gaz comprenant en outre la commande du moteur à turbine à gaz en fonction du second paramètre de fonctionnement de moteur en réponse à l'ajustement du second paramètre de fonctionnement de moteur.

9. Procédé selon la revendication 8, la détermination du second état d'activation comprenant la détermination (114) du fait que le système de suppression infrarouge est activé ou désactivé, ou la détermination du second état d'activation comprenant la détermination (116) d'un état d'activation modulé.

10. Procédé selon la revendication 8 ou la revendication 9, l'ajustement du second paramètre de fonctionnement de moteur comprenant la détermination d'une valeur de contre-pression en fonction du second état d'activation et l'ajustement du second paramètre de fonctionnement de moteur en fonction de la valeur de contre-pression.

11. Système de propulsion (10) pour véhicule, le système de propulsion comprenant :
un système de suppression infrarouge (32), le système de suppression infrarouge étant activé de manière variable ;
un moteur à turbine à gaz (14) ; et
un dispositif de commande de moteur (34) ;
**caractérisé en ce que** le dispositif de commande de moteur comprend une logique de commande de système de suppression infrarouge (38) conçue pour (i) déterminer une valeur de contre-pression en fonction d'un premier état d'activation du système de suppression infrarouge, (ii) ajuster un premier paramètre de fonctionnement de moteur du moteur à turbine à gaz en fonction du premier état d'activation pour s'adapter à la contre-pression ou autrement la compenser, et (iii) commander le moteur à turbine à gaz en fonction du premier paramètre de fonctionnement de moteur en réponse à l'ajustement du premier paramètre de fonctionnement de moteur.

12. Système de propulsion selon la revendication 11, la détermination de la valeur de contre-pression en fonction du premier état d'activation comprenant la détermination du fait que le système de suppression infrarouge est activé ou désactivé, ou le premier état d'activation comprenant un état d'activation modulé.
